Europäisches Patentamt

European Patent Office

Office européen des brevets

(11) Veröffentlichungsnummer: **0 001 129**

**A1**

(12) **EUROPÄISCHE PATENTANMELDUNG**

(21) Anmeldenummer: 78200119.2

(22) Anmeldetag: 27.07.78

(51) Int. Cl.²: **F 04 D 29/04**
        F 16 C 33/20

(30) Priorität: 10.08.77 DE 2735914

(43) Veröffentlichungstag der Anmeldung:
     21.03.79 Patentblatt 79/6

(84) Benannte Vertragsstaaten:
     BE CH DE FR GB SE

(71) Anmelder: International Standard Electric Corporation
     320 Park Avenue
     New York 22, N. Y.(US)

(84) Benannte Vertragsstaaten:
     BE CH FR GB SE

(71) Anmelder: Standard Elektrik Lorenz Aktiengesellschaft
     Hellmuth-Hirth-Strasse 42
     D-7000 Stuttgart 40(DE)

(84) Benannte Vertragsstaaten:
     DE

(72) erfinder: Sickau, Klemens
     Florastrasse 4a
     D-8300 Landshut(DE)

(74) Vertreter: Thul, Leo, Dipl.-Phys.
     Kurze Strasse 8 Postfach 300 929
     D-7000 Stuttgart 30(DE)

(54) Querstromlüfter für den Einsatz in Hochtemperaturatmosphäre.

(57) Ausbildung der Lagerung für die Lüfterwalze eines Querstromlüfters für den Einsatz bei hohen Temperaturen. Die drehbar gelagerte Lüfterwalze ist mit dem, dem Antriebsmotor gegenüberliegenden Ende in einem Gegenlager gehalten, das aus einem bei hohen Temperaturen formbeständigen und reibungsverschleissfestem thermoplastischen Kunststoff gebildet ist. Das Gegenlager ist von einer topfartigen Lagerkappe (5) gebildet, die in eine Ausnehmung einer Lagerbuchse (6) eingeführt ist. Die Lagerkappe (5) und die Lagerbuchse (6) schliessen einen Hohlraum ein, der eine Schmierstoffpackung (7) aufnimmt.

Fig.3

Croydon Printing Company Ltd.

## Querstromlüfter für den Einsatz in Hochtemperatur-
## atmosphäre

Die Erfindung betrifft einen Querstromlüfter für den Einsatz in einer Atmosphäre mit hoher Temperatur, bestehend
aus einer in einem Lüftergehäuse angeordneten drehbar
gelagerten Lüfterwalze, die an einem Ende in einem im
Lüftergehäuse angeordneten Gegenlager frei drehbar gelagert
und deren anderes Ende von einem am Lüftergehäuse befestigten
Motor angetrieben ist.

Da Querstromlüfter vorwiegend in Haushalts- und Bürogeräten
eingesetzt werden, verlangt man von ihnen neben einer hohen
Lebensdauer vor allem äußerste Laufruhe. Zu diesem Zweck
wird das Walzen-Gegenlager fast ausschließlich in eine
elastische, schwingungsdämpfende Membran eingeknöpft, so
daß durch dynamische Restunwucht der Walze erzeugte
Schwingungen nicht als Körperschall auf die integrierten
Teile wie Lüftergehäuse, Büro- oder Haushaltsgerät übertragen werden können.

Wegen der Forderung nach hoher Laufruhe können Wälzlager bei Querstromlüfter nicht eingesetzt werden; außerdem
wären sie für eine Massenanwendung zu teuer.

Bei den bekannten Querstromlüftern werden deshalb überwiegend ölgetränkte, poröse Sintermetall-Lager oder Kohlelager eingesetzt.

Für das zuverlässige Funktionieren eines ölgetränkten, porösen Sinterlagers sind u.a. eine gute Schmiegung von Welle und tragender Lagerschale, eine definierte Druckrichtung zum Aufbau der angestrebten hydrodynamischen Schmierung und ein geeignetes Tränköl Voraussetzung.

Da diese Voraussetzungen durch die konstruktiven Gegebenheiten eines Querstromlüfters mit der notwendigen elastischen Aufhängung, der körperelastischen Walze, die - vornehmlich bei höheren Temperaturen - auch noch Unwuchtänderungen erfährt, nicht immer ausreichend gewährleistet sind und die Anforderungen an den Querstromlüfter bezüglich Lebensdauer, Laufruhe und Einsatztemperatur in den letzten Jahren gestiegen sind, kann das ölgetränkte Sinter-Kapillar-Lager bei Hochtemperatur-Einsatz oft nicht mehr befriedigen.

Kohlelager zeigten bei ihrer Erprobung als Gegenlager für Querstromlüfter bei hohen Temperaturen zu hohen Verschleiß und intermittierend auch Quietschgeräusche.

Der Erfindung liegt deshalb die Aufgabe zugrunde, ein kostengünstiges Lager zu schaffen, das in engen Toleranzen herstellbar ist, in höheren Umgebungstemperaturen gute Formstabilität und Reibverschleißfestigkeit besitzt, im Geräuschverhalten einem Sinter-Metall-Gleitlager nicht nachsteht und bei Umgebungstemperaturen von + 80° C

aufwärts eine deutlich höhere Lebensdauer gewährleistet als das vorgenannte ölgetränkte Sintermetall-Kapillar-Lager.

Diese Aufgabe ist erfindungsgemäß dadurch gelöst, daß das Gegenlager aus einem bei hoher Temperatur formstabilen und reibverschleißfesten thermoplastischen Kunststoff besteht.

Weitere vorteilhafte Einzelheiten der Erfindung sind in den Ansprüchen 2 bis 11 enthalten. Die Erfindung wird nachstehend in den Figuren 1 bis 3 anhand eines Ausführungsbeispiels näher erläutert.

Es zeigen:

Fig.1     ein Querstromgebläse in Vorderansicht

Fig.2     die Einzelteile einer Ausführungsform eines Gegenlagers und

Fig.3     das montierte Gegenlager vor dem Einbau in das Querstromgebläse.

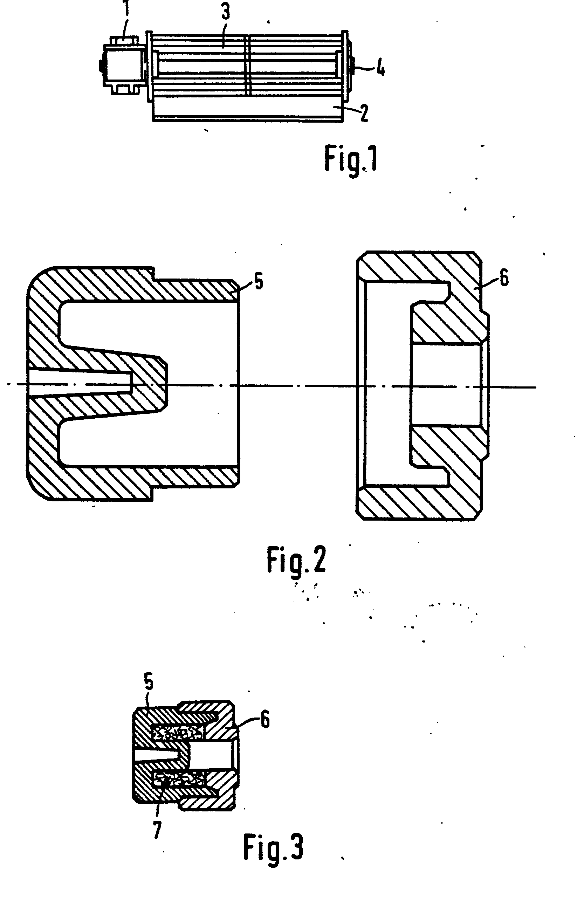

Fig.1 verdeutlicht den bekannten Aufbau eines Querstromgebläses, bestehend aus dem Lüftergehäuse 2, der Lüfterwalze 3, dem Antriebsmotor 1 und dem Gegenlager 4. Die Lüfterwalze ist am einen Ende am Läufer des Antriebsmotors 1

K.Sickau-1                    - 4 -

befestigt und am anderen Ende mit einem Achsstummel im Gegenlager 4 gelagert.

Fig.2 zeigt eine zweiteilige Ausführungsform des Gegenlagers 4, bestehend aus der Lagerkappe 5 und der Lagerbuchse 6. Beide Teile bestehen aus Kunststoff.

Bei Versuchen wurden die besten Ergebnisse mit einem für Gleitbeanspruchungen besonders geeigneten PA 6.6. erzielt, das bis zu 120° C Langzeitbeanspruchung und + 140° C wiederkehrende Kurzzeitbeanspruchung dem ölgetränkten Sintermetall-Gleitlager in der Lebensdauer überlegen ist. Für noch höhere Temperatur-Anwendungen ist der Einsatz von Werkstoffen wie Polyäthersulfon, Polyphenylensulfid oder auf der Basis von PTFE oder Polyimid aufgebauten Werkstoffen vorteilhaft.

Damit ein Kunststofflager die genannten Forderungen erfüllt, müssen die nachfolgend genannten Punkte be achtet werden.

Der für die jeweils geplante Einsatztemperatur zu erwartende Restschrumpfwert ist zweckmäßigerweise durch Tempern vorwegzunehmen.

Erfolgt das Tempern in Öl, so kann man sich zusätzlich die Fähigkeit einiger Kunststoffe zu Nutze machen, daß sie eine gewisse Menge Öl absorbieren, dadurch ihre Gleit- und Geräuschdämpfungseigenschaften verbessern und ihre maßlichen Veränderungen durch geringere Wasseraufnahme herabsetzen.

Eine Erhöhung der Lebensdauer des thermoplastischen Werkstoffes kann auch dadurch erreicht werden, daß man Mikrokapseln mit Schmierstoff, gleichmäßig verteilt, einspritzt, die sukzessiv mit dem Verschleißfortgang aufbrechen und die Gleitpartner schmieren.

Das Tempern des Gegenlagers oder seiner Einzelteile kann jedoch in den Fällen unterbleiben, in denen die Betriebstemperatur der Querstromgebläse bekannt ist. In diesem Fall können die Lagerteile mit Übermaß gespritzt werden. Das Tempern und Schrumpfen der Teile erfolgt dann zu Beginn des Betriebes.

Fig.3 zeigt das aus der Lagerkappe 5 und der Lagerbuchse 6 formschlüssig zusammengefügte Gegenlager, in dessen inneren Hohlraum eine Schmierpackung 7 angeordnet ist.

Patentanwalt
Dipl.-Phys. Leo Thul
Kurze Str. 8, Postfach 300 929
D-7000 Stuttgart 30
Deutschland

0001129

K.Sickau-1

## Ansprüche

1. Querstromlüfter für den Einsatz in einer Atmosphäre mit hoher Temperatur, bestehend aus einer in einem Lüftergehäuse angeordneten drehbar gelagerten Lüfterwalze, die an einem Ende in einem im Lüftergehäuse angeordneten Gegenlager frei drehbar gelagert und deren anderes Ende von einem am Lüftergehäuse befestigten Motor angetrieben ist, dadurch gekennzeichnet, daß das Gegenlager (4) aus einem bei hoher Temperatur formstabilen und reibverschleißfesten thermoplastischen Kunststoff besteht.

2. Querstromlüfter nach Anspruch 1, dadurch gekennzeichnet, daß das Gegenlager aus PA 6.6 (Polyamid) besteht.

3. Querstromlüfter nach Anspruch 1, dadurch gekennzeichnet, daß das Gegenlager aus Polyäthersulfon besteht.

4. Querstromlüfter nach Anspruch 1, dadurch gekennzeichnet, daß das Gegenlager aus Polyphenylensulfid besteht.

Bö/Sch
4.8.1977

0001129

K.Sickau-1

5. Querstromlüfter nach Anspruch 1, dadurch gekennzeichnet, daß das Gegenlager aus einem spritzgießfähigen Polytetrafluoräthylen besteht.

6. Querstromlüfter nach Anspruch 1, dadurch gekennzeichnet, daß das Gegenlager aus einem spritzgießfähigen Polyimid besteht.

7. Querstromlüfter nach Anspruch 1 und einem der Ansprüche 2 bis 6, dadurch gekennzeichnet, daß das Gegenlager einer Wärmebehandlung unterzogen worden ist.

8. Querstromlüfter nach den Ansprüchen 1 und 7 sowie einem der Ansprüche 2 oder 5, dadurch gekennzeichnet, daß die Wärmebehandlung in Öl erfolgt ist.

9. Querstromlüfter nach Anspruch 1 sowie einem oder mehreren der Ansprüche 2 bis 8, dadurch gekennzeichnet, daß das Gegenlager (4) aus einer rotationssymmetrischen becherförmigen Lagerkappe (5) und einer rotationssymmetrischen topförmigen Lagerbuchse (6) mit zentraler Axialbohrung besteht, welche ineinandergesteckt kraft- und/oder formschlüssig miteinander verbunden sind.

10. Querstromlüfter nach Anspruch 1, sowie einem oder mehreren der Ansprüche 2 bis 9, dadurch gekennzeichnet, daß in einem zylindrischen Hohlraum innerhalb des Gegenlagers ein Schmiermittel angeordnet ist.

K.Sickau-1

11. Querstromlüfter nach Anspruch 1, sowie einem oder mehreren der Ansprüche 2 bis 10, dadurch gekennzeichnet, daß dem Gegenlagerwerkstoff einen Schmierstoff enthaltende Kapseln zugesetzt sind.

0001129

1/1

Fig.1

Fig.2

Fig.3

K. Sickay-1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US – A – 3 255 957 (NIKOLAUS LAING)<br><br>* Figur 4; Spalte 4, Zeilen 66–72 * | 1,5 |
| | MASCHINENMARKT, Würzburg, 82 (1976) 77 Seiten 1397–1400, insbesondere Seite 1397, rechte Spalte | 2 |
| | FR – A – 2 298 033 (GARLOCK INC.)<br><br>* Seite 2, Zeilen 30–32; Seite 3, Zeilen 17–24; Seite 4, Zeilen 1–4 * | 2–6 |
| | MACHINE DESIGN, 13.Juli 1972 Seiten 119–122 | 2,5,6 |
| | DE – A – 2 155 443 (TISSOT & FILS)<br><br>* Seite 3, Zeilen 1, 24–25; Seite 5, Zeile 22 bis Seite 6, Zeile 6; Figur 6 * | 9 |
| | GB – A – 1 073 802 (SAIA AG)<br><br>* Seite 2, Zeilen 69–76; Figur 2 * | 10 |
| | US – A – 3 583 778 (H.MORI)<br><br>* Seite 1, Spalte 2, letzter Absatz, Pos. 2 * | 10 |

./.

**KLASSIFIKATION DER ANMELDUNG (Int.Cl.²)**

F 04 D 29/04
F 16 C 33/20

**RECHERCHIERTE SACHGEBIETE (Int. Cl.²)**

F 04 D 17/04
F 04 D 29/04
F 16 C 33/20
F 16 N 21/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 10-10-1978 | HAUGG |

EPA form 1503.1 06.78

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE – A – 2 447 389 (SARGENT) <br><br> * Seite 3, letzter Absatz; Seite 5, letzter Absatz; Seite 6, erster Absatz * <br><br> --- | 11 | |
| A | MACHINE DESIGN, tech briefs, 23. Januar 1975 <br> Seiten 116,117 <br><br> --- | | |

RECHERCHIERTE SACHGEBIETE (Int. Cl.²)

| A | DE – U – 1 903 689 (N.LAING) <br><br> * Figur 1, Pos. 28, Seite 4, Absatz 2, Zeile 10 * <br><br> ----- | | |